Europäisches Patentamt

European Patent Office

Office européen des brevets

(11) Publication number: **0 242 740 B1**

# EUROPEAN PATENT SPECIFICATION

(45) Date of publication of patent specification: **02.12.92**  (51) Int. Cl.⁵: **G02B  6/44**

(21) Application number: **87105342.7**

(22) Date of filing: **10.04.87**

(54) **Method for joining two peripherally-grooved cable cores and the joint thus obtained.**

(30) Priority: **14.04.86 IT 2007986**

(43) Date of publication of application:
**28.10.87 Bulletin  87/44**

(45) Publication of the grant of the patent:
**02.12.92 Bulletin  92/49**

(84) Designated Contracting States:
**DE ES FR GB NL SE**

(56) References cited:
**EP-A- 0 092 441**
**EP-A- 0 115 725**
**GB-A- 2 160 997**
**US-A- 4 220 619**

(73) Proprietor: **PIRELLI CAVI S.p.A.**
**Piazzale Cadorna, 5**
**I-20123 Milano(IT)**

(72) Inventor: **Bortolin, Bruno**
**Via Cantore, 23**
**Cinisello Balsamo (Milan)(IT)**
Inventor: **Dotti, Enrico**
**Via Archimede, 22**
**Milan(IT)**

(74) Representative: **Sirtori, Giorgio et al**
**Pirelli S.p.A. Direzione Brevetti Piazzale**
**Cadorna, 5**
**I-20123 Milano(IT)**

EP 0 242 740 B1

## Description

The present invention concerns a method for joining the ends of two extended elements provided with peripherical grooves, commonly known as grooved cores, in particular, of the type which are intended for housing one or more transmissive optical elements in telecommunication cables, as well as the joint thus obtained.

By the term 'grooved core' is meant a structure comprising at least one central element, resistant to tractions and compressions, and a covering of a thermoplastic material, provided with one of more grooves upon its outer surface which are apt for housing the transmissive elements of the optical, and eventually of the electrical type.

Preferably, the inner resistant element is a metalic wire disposed in a central position, around which a thermoplastic material covering is formed through extrusion means. The grooves can be either rectilineal, a closed, or an open-helix (i.e. with periodic directional inversions), and they can be extended for the entire outer surface, or else, on only one strip of it.

The transmissive element of the optical type is preferably an optical fibre of the type that is provided with at least one primary covering.

The invention is directed to realizing the jointing of the ends of two grooved cores of the above-described type.

The grooved cores have to be connected to each other in diverse circumstances. For example, the joint of an optical fibres cable, requires the jointing of the grooved core as an operative phase.

Moreover, the same grooved core, considered as a product apart that is destined for being used in optical fibre cables and, in general, for connections realized with optical elements, could require the said jointing for diverse motives.

In fact, although the construction of grooved cores having any whatsoever length is theoretically possible, the construction of lengths that are not excessively long is preferable both from a qualitative viewpoint of the product, as well as for the successive transportation of the same.

The jointing of the ends of the grooved cores, is presently realized by mechanically connecting together the internal resistant elements, after the removal of an appropriate length of thermoplastic covering, and thereafter, reconstructing the thermoplastic covering, with the grooves correctly fitted together without any discontinuities that could negatively influence the transmission characteristics of the optical fibres that are housed therein.

According to the known technique, for reconstructing the portion of thermoplastic material, recourse is had to special moulds inside which the two extremities of the cores are positioned preferably after the connection (by welding, ferrules etc.) of the central element, and wherein there is injected the thermoplastic material which has to form the reconstructed layer.

This method presents diverse drawbacks. Firstly, it requires a special mould and the necessary equipment for the fusing and moulding processes.

Secondly, the mould of this type can be used only for a given grooved core, and a new mould must be prepared should a grooved core having diverse dimensions be used, or if the grooves are diverse in number, form, or lay-out etc. Such a type of mould is costly and cannot be got ready in a short period of time and moreover, it must be substituted if the grooved core has to undergoes even a minimum modification - for example, in the pitch of the groove and/or in their depth.

Moreover, this operation requires a certain amount of ability - seeing that it necessitates an appropriate dosage of the material introduced, its correct temperature etc.

To end with, since the mould is formed by two or more parts connected together, the formation of burrs - in correspondence of the jointing line of the mould is unavoidable. Hence, said burrs have to be removed by means of a successive mechanical machining for eliminating the risk of introduc-ing attenuations into the optical fibres.

Another known joint, substantially having the drawbacks above reported, is the one described in US-A-4 172 746.

In fact in the joint according to the above patent a termination, comprising a machine made cylindrical ceramic grooved element is to be adhesively secured to each cable end, the optical fibers of the two cables are adhesively secured inside the grooves of said ceramic grooved elements and the so terminated cable ends are secured one to the other by means of a complex mechanical structure.

Therefore, the aim of the present invention is to realize a method that is particularly simple, for joining the extremities of two grooved cores, which does not require the use of any costly equipment and that results as being easy to effectuate on any whatsoever type of grooved core.

A further aim of the invention is to realize the jointing in an optimal manner without requiring the need of further operations, and with using the minimum equipment that is hence, cheap and also extremely simple to use and which can be got ready in a brief period of time for any whatsoever type of grooved core.

This invention consists of a method of joining the ends of two cable cores (1, 2), each comprising at least one central elongated strenght member (11, 12) surrounded by a covering of thermoplastic material having on its peripheral surface one or more grooves (15, 16), which are apt to house optical fibres, said method being characterized by the following steps:

a) applying a tube (5) over one of the ends of the cores to be joined, said tube (5) consisting of heat-shrinkable material and having an inner diameter which is slightly greater than the outer diameters of the core;

b) removing the thermoplastic covering from an end portion of each core

c) mechanically connecting the strenght members of each core, thereby

forming a continuous strenght member having a section bare of

thermoplastic covering;

d) inserting onto the bare section a sleeve made of the same thermoplastic material as the covering and having grooves in its peripheral surface corresponding to the grooves of the cores to be joined, a diameter equal to the diameter of the cores, a lenght shorter than the heat-shrinkable tube and a longitudinal slot, said sleeve being obtained by removing the strenght member from a predetermined lenght of a similar core and longitudinally slotting said lenght of remaining covering;

e) aligning the grooves (15, 16) of the cores and the grooves of the sleeve by inserting into each groove of the sleeve a metallic structural element (6) having a greater length than the sleeve and a cross sectional shape which conforms with the shape of the grooves, so that the end portions of said elements extend into the respective grooves of the termoplastic covering of the cores;

f) positioning the heat-shrinkable tube (5) at least over the sleeve (4) and over the elements (6);

g) applying heat to the entire assembly of sleeve (4), tube (5) and elements (6) so as to cause the the tube to shrink and the underlaying thermoplastic sleeve to melt locally, whereby the sleeve is fused to the thermoplastic covering of the cores, respectively, and the groove configuration is maintained;

h) removing the heat-shrinkable tube (5) and the metallic structural elements (6) from the joint thus obtained.

Moreover, this invention leads to a joint, made between two grooved cores, comprising at least one resistant element and a plastic covering having, on its outer surface, one or more grooves that are apt for housing transmissive elements of the optical type, which are obtained through said method.

The invention will now be described - with reference to a non-limiting example of an embodiment, illustrated in the attached figures from 1 to 4 which show the main phases of this method.

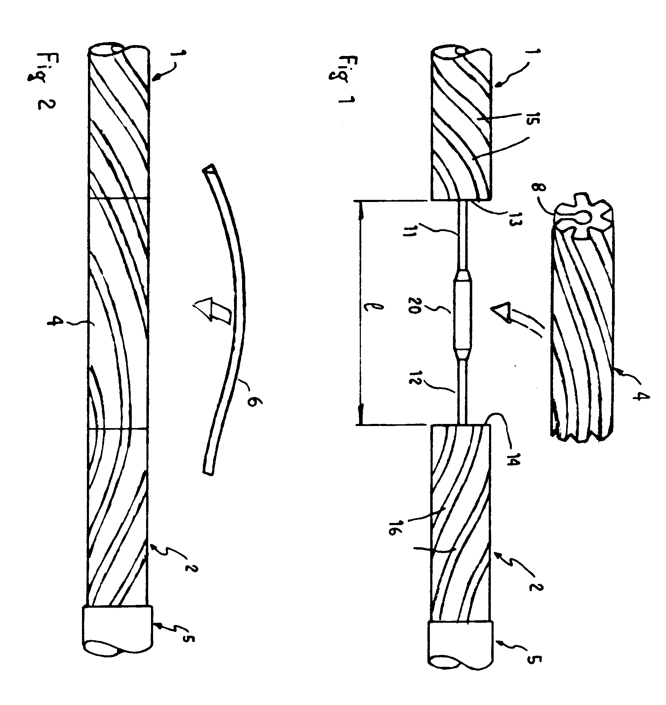

The two grooved cores 1 and 2, shown in the FIG. 1, are of the type having a central resistant element (11, 12), around which there is foreseen a thermoplastic covering (13, 14) of nylon, for example, upon whose outer surface, six, equidistributed, helicoidal open-helix grooves (15, 16) i.e. grooves, wherein the direction of the helix is periodically inverted, are provided. The resistant elements for each of the cores, could also be more than one, for example, all twisted together.

Upon one of the two cores, is inserted a tube 5 of a heat-shrinkable material, with an inner diameter that is slightly greater than the diameter of the grooved core. By 'diameter of the grooved core' is intended here the diameter of the tube circumference, where the core itself is inscribed. The softening temperature for the tube 5 is higher than that of the thermoplastic material of the core. In FIG. 1 the tube 5 (just shown partially) is positioned on the core 2.

The end portions of said two grooved cores (1, 2), are bared of their thermoplastic covering, for a tract of a suitable length, that can be of 5- 20 mm, for uncovering the end portions of the resistant elements 11, 12, that are thereafter joined together mechanically, for example, by means of a ferrule or else, through other known means.

Generally speaking, the connection is such as to determine a slight thickening in corresponding of the jointing between the resistant elements. In FIG. 1, there is shown the configuration assumed by the two grooved cores 1 and 2, after the connection of the resistant elements 11 and 12.

There is then prepared a sleeve 4, having a length $h$ which is equal to the tract, bared of its covering, of the so-formed resistant element. This sleeve is obtained from a length of a grooved core (which is identical to the grooved cores to be joined) with making a longitudinal cut 8 through which the resistant element is removed. Said longitudinal cut can be rectilineal, or else, curvilinear with extending, for example, between two grooves, in such a manner that none of the sleeve grooves become nicked, or altered in any way, by the longitudinal cut.

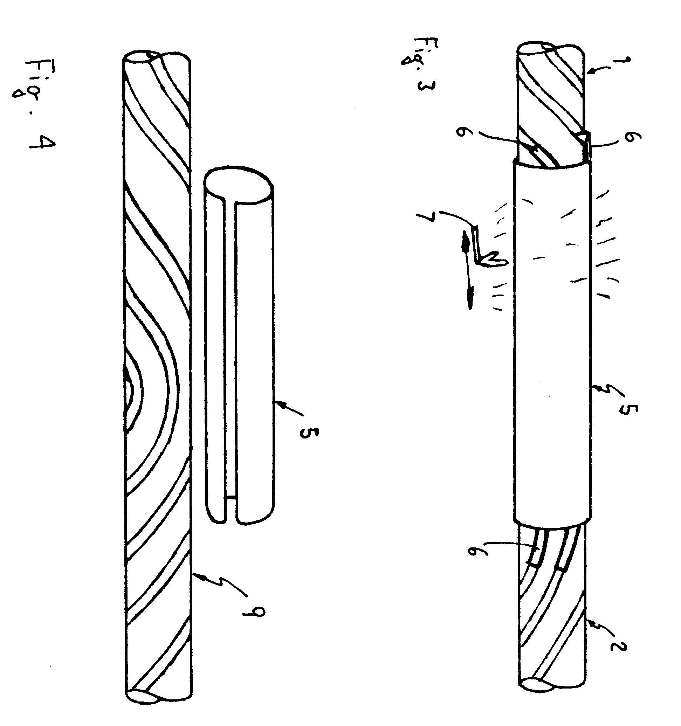

Sleeve 4 is then positioned, again thanks to the longitudinal cut 8, on the joined resistant element (as is visible in FIG. 2) with causing, as far as possible, the grooves 15 and 16 of the core ends to be joined so as to correspond with the grooves present on the sleeve.

Successively, into each groove there is inserted a metallic structural element 6 having a section equal to that of the groove, a greater length than the sleeve length $h$, and a configuration equal to that of the core grooves. More particularly, the element 6 (shown in FIG. 2) presents an open-helix configuration, for coupling with the open-helix configuration of both core grooves. In the instance of closed-helix, or rectilineal grooves, the elements 6 would have a corresponding configuration.

The elements 6 are obtained by simply drawing a soft pliable material, for example, copper or aluminium, which is then shaped manually. Their elasticity can eventually compensate for any imperfect reproduction of the configuration of the grooves. Moreover, their cost results as being rather negligible, and they can be prepared as a function of the dimensions of the grooved cores, of the shape of the transversal section of the grooves, and of the configuration of the same, in a simple and rapid manner.

Once the structural elements 6 have been inserted into the grooves of the cores and of the sleeve in such a manner as to connect them together, then the heat-shrinkable tube 5 is caused to slide and to be positioned on the sleeve. The tube length is greater than the sleeve length, but it is preferably lesser than the length of the structural elements. Thereafter, the heating is carried out in a uniform way, either with hot air, or with a flame 7, that is made to slide longitudinally (as shown in FIG. 3), with simultaneously rotating it around the core.

The heat causes a uniform thermo-shrinkage of the tube 5, around the underlying thermoplastic material, and also the localized melting of the underlying thermoplastic material, which becomes shaped, or moulded by the structural elements 6 and by the inner surface of the tube 5 in such a way as to form helical grooves that are absolutely devoid of any discontinuity and/or burrs.

As already indicated, the tube 5 is made out of a thermo-shrinkable material, having a higher melting temperature when compared to the melting temperature of the thermo-plastic material of the cores, said latter being equal to about the temperature at which said thermo-shrinkage occurs. The material of the said tube can, for example, be a fluoropolymer.

The inner diameter of tube 5 is slightly greater than the diameter of the grooved cores, so that a same tube is practically suited for being used with grooved cores with diverse diameters, apart from, of course, absorbing eventual constructive tolerances that could be encountered between grooved cores that are produced, for example, at different times.

Once the joint is cooled, tube 5 is removed, by making a longitudinal cut, from the joined grooved core in which the said thermoplastic material does not present any discontinuities, and where even the swelling, due to the ferrule 20, has been absorbed.

The method, according to the invention, results as being particularly advantageous and economical. In fact, it allows for completely eliminating the costs involved with using a mould, and this latter is substituted by a low priced component such as the structural elements 6 and thermoshrinkable sleeve 5. Moreover, the method results as being extremely flexible, since, contrary to what could be had with moulds, it is made independent of any dimensions, and of any particular configuration of the grooved core. Moreover, the necessary components 5 and 6, if required, can be got ready in a very short period of time.

Moreover, the elimination of the mould itself, allows for dosing, with precision, the quantity of thermoplastic material that is necessary for reconstructing. In fact, except for the slight excess due to the thickening, in correspondence of the joint between the resistant elements, the sleeve 4 contains the exact quantity of material that is necessary for reconstructing the h length tract.

The joining operations do not require any particular ability, since no critical operations exist, not even for the heating necessary for melting, and to end with, no supplementary working operations are necessary for the elimination of burrs.

The invention is also intended to include different types of grooved cores and in particular, cores having rectilineal, closed-helix grooves, or yet other configurations for said grooves.

**Claims**

1. Method of joining the ends of two cable cores (1, 2), each comprising at least one central elongated strenght member (11, 12) surrounded by a covering of thermoplastic material having on its peripheral surface one or more grooves (15, 16), which are apt to house optical fibres, said method being characterized by the following steps:
   a) applying a tube (5) over one of the ends of the cores to be joined, said tube (5) consisting of heat-shrinkable material and having an inner diameter which is slightly greater than the outer diameters of the core;
   b) removing the thermoplastic covering from an end portion of each core
   c) mechanically connecting the strenght members of each core, thereby
   forming a continuous strenght member having a section bare of
   thermoplastic covering;
   d) inserting onto the bare section a sleeve made of the same thermoplastic material as the covering and having grooves in its peripheral surface corresponding to the grooves of the cores to be joined, a diameter equal to the diameter of the cores, a lenght shorter than the heat-shrinkable tube and a longitudinal slot, said sleeve being obtained by removing the strength member from a predetermined lenght of a similar core and longitudinally slotting said length of remaining covering;

e) aligning the grooves (15, 16) of the cores and the grooves of the sleeve by inserting into each groove of the sleeve a metallic structural element (6) having a greater length than the sleeve and a cross sectional shape which conforms with the shape of the grooves, so that the end portions of said elements extend into the respective grooves of the termoplastic covering of the cores;

f) positioning the heat-shrinkable tube (5) at least over the sleeve (4) and over the elements (6);

g) applying heat to the entire assembly of sleeve (4), tube (5) and elements (6) so as to cause the tube to shrink and the underlaying thermoplastic sleeve to melt locally, whereby the sleeve is fused to the thermoplastic covering of the cores, respectively, and the groove configuration is maintained;

h) removing the heat-shrinkable tube (5) and the metallic structural elements (6) from the joint thus obtained.

2. Method, according to CLAIM 1, characterized by the fact that the said grooves (15, 16) have a helicoïdal configuration and are equidistributed on the peripheral surface of the core.

3. Method, according to CLAIM 1 or 2, characterized by the fact that the ends of the strength members (1, 2) are caused to be joined together by means of a ferrule (20).

**Patentansprüche**

1. Verfahren zur Verbindung der Enden zweier Kabel-Seelen (1,2), deren jede wenigstens einen mittleren langgestreckten Festigkeitsteil (11,12) aufweist, der von einer Bedeckung aus thermoplastischem Material umgeben ist, die an ihrer Umfangsfläche eine oder mehrere Nuten (15,16) hat, welche optische Fasern aufnehmen können, wobei das Verfahren durch die nachstehenden Schritte gekennzeichnet ist:

a) Aufbringen eines Schlauches über eines der Enden der zu verbindenden Seelen, wobei der Schlauch (5) aus wärmeschrumpffähigem Material besteht und einen Innendurchmesser hat, der geringfügig größer als die Außendurchmesser der Seelen ist;

b) Entfernen der thermoplastischen Bedeckung von einem Endteil jeder Seele;

c) mechanisches Verbinden der Festigkeitsteile jeder Seele, um dadurch

einen kontinuierlichen Festigkeitsteil zu bilden, der einen Abschnitt hat, an welchem eine thermoplastische Bedeckung nicht vorhanden ist;

d) Einsetzen einer Hülse an dem von der thermoplastischen Bedeckung freien Abschnitt, wobei die Hülse aus dem gleichen thermoplastischen Material wie die Bedeckung gebildet ist und in ihrer Umfangsfläche Nuten, die den Nuten der zu verbindenden Seelen entsprechen, einen Durchmesser gleich dem Durchmesser der Seelen, eine Länge kürzer als der wärmeschrumpffähige Schlauch und einen Längsschlitz hat, und wobei die Hülse erhalten ist durch Entfernen des Festigkeitsteiles von einer vorbestimmten Länge einer ähnlichen Seele und Bilden eines Längsschlitzes auf der Länge der verbleibenden Bedeckung;

e) Ausrichten der Nuten (15,16) der Seelen und der Nuten der Hülse durch Einsetzen eines metallenen Strukturelementes (6) in jede Nut der Hülse, welches eine Länge größer als diejenige der Hülse und eine Querschnittsgestalt hat, die mit der Gestalt der Nuten übereinstimmt, so daß die Endteile der Elemente sich in die betreffenden Nuten der thermoplastischen Bedeckung der Seelen erstrecken;

f) Anordnen des wärmeschrumpffähigen Schlauches (5) wenigstens über der Hülse (4) und über den Elementen (6);

g) Anlegen von Wärme an das Gesamtgebilde aus Hülse (4), Schlauch (5) und Elementen (6) derart, daß bewirkt wird, daß der Schlauch schrumpft und die darunterliegende thermoplastische Hülse örtlich schmilzt, wodurch die Hülse an die thermoplastische Bedeckung der Seelen angeschmolzen und die Gestalt der Nuten aufrechterhalten wird; und

h) Entfernen des wärmeschrumpffähigen Schlauches (5) und der metallenen Strukturelemente (6) von der auf diese Weise erhaltenen Verbindung.

2. Verfahren nach Anspruch 1, dadurch gekennzeichnet, daß die Nuten (15,16) schraubenlinienförmige Gestalt haben und an der Umfangsfläche der Seele gleichmäßig verteilt sind.

3. Verfahren nach Anspruch 1 oder 2, dadurch gekennzeichnet, daß die Enden der Festigkeitsteile (1,2) veranlaßt werden mittels einer Zwinge (20) miteinander verbunden zu werden.

**Revendications**

1. Procédé d'assemblage des extrémités de deux noyaux (1, 2) de câbles, comprenant chacun au moins un organe central allongé de résistance (11, 12) entouré par une gaine en matière thermoplastique comportant sur sa surface périphérique une ou plusieurs gorges (15, 16) qui sont aptes à loger des libres optiques, ledit procédé étant caractérisé par les étapes suivantes :

   a) appliquer un tube (5) au-dessus de l'une des extrémités des noyaux à assembler, ledit tube (5) consistant en une matière rétrécissant à la chaleur et étant d'un diamètre intérieur qui est légèrement supérieur aux diamètres extérieurs des noyaux;

   b) enlever la gaine thermoplastique d'une partie d'extrémité de chaque noyau;

   c) relier mécaniquement les organes de résistance de chaque noyau, afin de former de cette manière un organe continu de résistance à section nue sans gaine thermoplastique;

   d) insérer sur la section nue une douille consistant en la même matière thermoplastique que la gaine et comportant, dans sa surface périphérique, des gorges correspondant aux gorges des noyaux à assembler, d'un diamètre égal au diamètre des noyaux, d'une longueur plus courte que le tube rétrécissant à la chaleur et comportant une lente longitudinale, ladite douille étant réalisée en enlevant, d'une longueur prédéterminée d'un noyau semblable, l'organe de résistance et en fendant longitudinalement ladite longueur de gaine restante;

   e) aligner les gorges (15, 16) des noyaux et les gorges de la douille en insérant dans chaque gorge de la douille un élément métallique structurel (6) d'une longueur plus grande que le noyau et d'une forme en coupe transversale qui est conformée à celle des gorges, de sorte que les parties d'extrémité desdits éléments s'étendent dans les gorges respectives de la gaine thermoplastique des noyaux;

   f) positionner le tube rétrécissant à la chaleur (5) au moins au-dessus de la douille (4) et au-dessus des éléments (6);

   g) appliquer un échauffement à tout l'ensemble formé par la douille (4), le tube (5) et les éléments (6) de façon à amener le tube à se rétrécir et la douille thermoplastique sous-jacente à fondre localement, grâce à quoi la douille est soudée sur la gaine thermoplastique des noyaux, respectivement, et la configuration de gorge est maintenue;

   h) enlever du joint ainsi obtenu le tube (5) rétrécissant à la chaleur et les éléments structurels métalliques (6).

2. Procédé selon la revendication 1, caractérisé par le lait que lesdites gorges (15, 16) sont d'une configuration en hélice et sont réparties de façon égale sur la surface périphérique du noyau.

3. Procédé selon la revendication 1 ou 2, caractérisé par le fait que les extrémités des organes de résistance (1, 2) sont amenés à être assemblés entre eux à l'aide d'un manchon (20).

EP 0 242 740 B1

Fig 2

Fig 1

7

Fig. 4

Fig. 3